# EUROPEAN PATENT APPLICATION

(11) **EP 3 179 482 A1**
(43) Date of publication of application: **14.06.2017**
(21) Application number: 15199361.5
(22) Date of filing: 10.12.2015
(51) Int. Cl.: H01B 3/00, H02K 3/40

(54) **CONDUCTOR ARRANGEMENT WITH INSULATION FOR AN ELECTRICAL MACHINE**

(71) Applicant: ABB Schweiz AG, 5400 Baden (CH)
(72) Inventor: Szucs, Aron, 00370 Helsinki (FI)
(74) Representative: ABB Patent Attorneys

(57) **Abstract**

A conductor arrangement (200) for an electrical machine (100) is proposed. The wound conductor arrangement includes: an electrical conductor (201) having a longitudinal direction (z) and comprising a conductor surface, the electrical conductor including an electrically conductive material; and an insulation for insulating the electrical conductor (201) including one or more insulation layers (202; 203). The one or more insulation layers (202, 203) include a diamond containing layer (330), wherein the diamond containing layer (330) includes continuously provided diamonds (320; 331; 333; 340) with diamond particles larger than 200 nm, wherein the diamond containing layer (330) provides the highest dielectric strength of the one or more insulation layers (202; 203), and/or wherein the diamond containing layer (330) provides the highest partial discharge resistance of the one or more insulation layers (202; 203). The diamond containing layer (330) includes between 0% and 5% by volume mica.

## Description

### Technical Field

The invention relates to the field of conductors for electrical machines, in particular to the insulation of a conductor for an electrical machine. The invention further relates to several insulation layers provided on and around the conductor.

### Background Art

Electrical conductors for electrical machines , such an electromotor or generator, are insulated for avoiding contact between the single windings of the coils, but also for avoiding a short between the coil and other conductive components of the electromotor, for example the stator of the electromotor. For instance, the main wall insulation (e.g. mica tape and impregnated resin) is used nowadays to insulate a conductor on full potential to the stator core on ground potential.

Currently, the so-called vacuum pressure impregnation (VPI) technology is used and widely applied by many machine manufacturers. In this process, layers of mica tape are wound on conductors. The layers of mica tape are impregnated with thermosetting resins and thermally cured subsequently to obtain the so-called main wall insulation - the final mica-resin composite. In case of motors and small generators (<15 kV) complete stators with inserted form-wound coils are fully impregnated in a global VPI process. For large generators, insulated Roebel bars are manufactured and impregnated individually (single VPI).

The principle of using mica tape and resin impregnation has not changed for almost one century and is well established to produce main wall insulation on a complex conductor shape and overall size, such as coils or Roebel bars for large electrical machines. To create a finished stator coil and Roebel bar today, the widespread application of robotics for coil forming, insulation taping and consolidation have improved the known process. However, these insulations have poor heat conducting properties for electrical machines. In particular, mica tapes known to be used in electrical machine windings have good dielectric strength and partial discharge resistance, but poor heat conductivity properties.

As the produced losses in the form of heat are usually the bottle neck of the design of electrical machines, the low thermal conductivity of insulations contributes to design limitations significantly. For many materials suitable for electrical insulation, thermal and electric conductivity is assumed to go hand in hand, so an electrical insulator is seen as a thermal insulator, too. This is due to the fact that the free movement of electrons, which corresponds with electric conductivity, is also seen as the major contributor of heat conduction.

### Brief Summary of the Invention

In view of the above, a conductor arrangement according to claim 1, an electric machine including a conductor arrangement according to claim 13, and the use of diamonds in an insulation layer of a conductor arrangement for an electrical machine according to claim 14 are provided. Further aspects, advantages, and features of the present invention are apparent from the dependent claims, the description, and the accompanying drawings.

According to an aspect of the invention, a conductor arrangement, typically a wound conductor arrangement, for an electrical machine is provided. The conductor arrangement includes an electrical conductor having a longitudinal direction and including a conductor surface, wherein the electrical conductor includes an electrically conductive material. The conductor arrangement further includes an insulation for insulating the electrical conductor including one or more insulation layers being at least partially provided around the conductor. The one or more insulation layers includes a diamond containing layer, wherein the diamond containing layer includes continuously provided diamonds with diamond particles larger than 200 nm in a direction substantially parallel to the conductor surface. Further, the diamond containing layer provides the highest dielectric strength of the one or more insulation layers, and/or the diamond containing layer provides the highest partial discharge resistance of the one or more layers. The diamond containing layer comprises between 0% and 5% by volume mica.

Generally, diamond can be a good insulator and a heat conductor at the same time. The effects are due to the fact that diamond can conduct heat (phonon transfer) by lattice vibrations instead of utilizing electrons. Economically, a better heat conductivity and a higher dielectric strength than mica based insulations can be provided by the conductor arrangement according to embodiments described herein. Using diamond for the (main) insulation of the conductor arrangement allows for a new electrical machine design, higher efficiency and / or energy density. Also, novel thermal management methods for electrical machines are possible, enabling previously unreachable performance characteristics.

According to a further aspect of the invention, an electric machine, in particular an electromotor, having a conductor arrangement according to any of the herein described embodiments is provided.

According to still a further aspect, the use of diamonds in an insulation layer for an electrical conductor having a surface and a radial direction is provided. The diamonds are provided in a diamond containing layer, wherein the diamond containing layer includes continuously provided diamonds with diamond particles larger than 200 nm in a direction substantially parallel to the conductor surface. The diamond containing layer comprises between 0% and 5% by volume mica.

Embodiments described herein allow for utilizing the extremely high heat conductivity with thinner insulation layers than known. Novel thermal management technologies can be used, which lead to new machine performance levels. Due to the changed situation regarding the thermal characteristics with diamond insulation, the heat flow in electrical machines can be designed much more efficiently.

### Brief Description of the Drawings

The subject matter of the invention will be explained in more detail in the following text with reference to preferred exemplary embodiments which are illustrated in the drawings, in which:
Figure 1 is a schematic drawing of a coil of an electric machine;
Figures 2 and 3 show a schematic front view of a conductor arrangement according to embodiments described herein;
Figure 4 shows a schematic perspective view of a wound conductor arrangement according to embodiments described herein;
Figure 5 is a schematic drawing of a conductor arrangement provided with an insulator according to embodiments described herein;
Figure 6 is a schematic partial and more detailed view of the electrical conductor arrangement provided with an insulator according to embodiments described herein;
Figure 7 to 10 show a schematic view of an insulation layer including a diamond containing layer of a conductor arrangement according to embodiments described herein; and
Figure 11 shows a flowchart of a method of insulating a conductor according to embodiments described herein.

The reference symbols used in the drawings, and their meanings, are listed in summary form in the list of reference symbols. In principle, identical parts are provided with the same reference symbols in the figures.

### Preferred Embodiments of the Invention

According to embodiments described herein, a conductor arrangement is provided, which in particular is used in electrical machines. For instance, the conductor arrangement according to embodiments described herein may be used in electrical motors, generators, and/or transformers. Typically, the conductor arrangement may include a wound conductor.

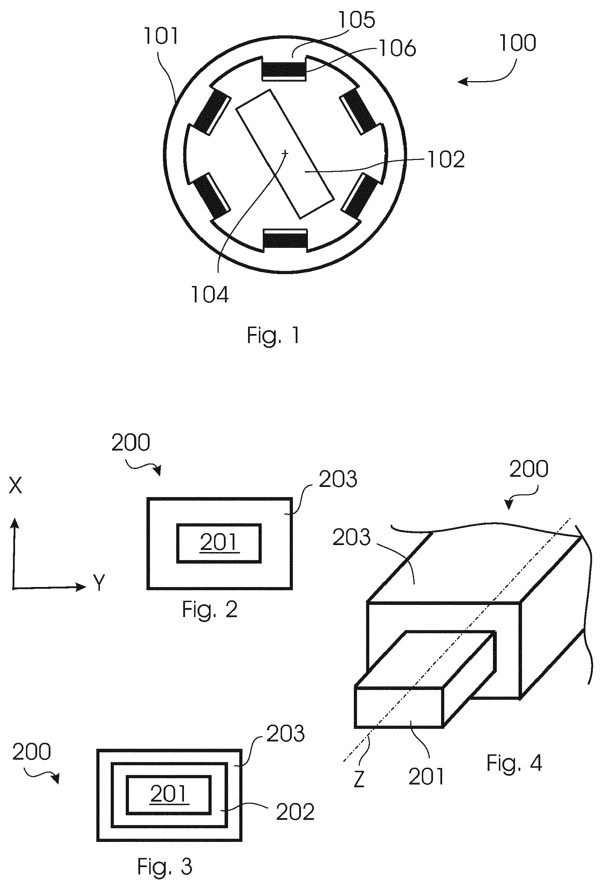

Figure 1 shows an example of a wound coil as a conductor arrangement in a basic structure of an electrical motor. The electrical motor 100 includes a stator 101 and a rotor 102.The stator 101 is exemplarily shown having a stator core 105, which is for instance provided in a cylinder-like shape and which is provided with six wound conductors 106 or multi-turns, such as coils or windings, which are connected to a power source. The magnetic rotor 102 (which may also include a wound conductor, which is not shown in Fig. 1 for the sake of simplicity) may be adapted for rotating about an axis 104 pointing in the plane of the drawing sheet. By providing current in the windings 106, a magnetic field is induced. The magnetic rotor 102 may be rotated in the direction of one of the magnetic fields induced by the windings 106 by the magnetic force due to the polarity of the generated magnetic field. The rotor 102 is rotated until adverse poles of the magnetic fields of the rotor 102 and the windings 106 face each other. The windings 106 may then be commutated and the magnetic poles of the rotor 102 and the windings 106 - having the same polarity after commutation - reject each other. Due to the magnetic forces between the rotor 102 and each winding 106, which reject and attract each other, the rotor 102 is continuously rotated. In this way, a rotational movement of the rotor 102 may be achieved. The skilled person may understand that an electrical machine as referred to herein is not limited to the design shown in Figure 1. As an example, the coil may be statically arranged around a rotor.

Generally, an electrical machine as referred to herein may be an electrical machine for high voltages. For instance, the electrical machine and the conductor arrangement according to embodiments described herein may be adapted for a rated voltage being typically larger than 1 kV, more typically larger than about 15 kV, and even more typically larger than about 30 kV. In some embodiments, the electrical machine and the conductor arrangement according to embodiments described herein may be adapted for an electric machine, such as a motor or a generator working with a frequency of about 50 Hz.

Generally, it may be understood that embodiments of the invention are not limited to the embodiments shown in the figures. Rather, the embodiments shown in the figures are only examples, e.g. examples for conductors. Further examples may include other conductor arrangement being used in an electrical machine for generating a magnetic field.

According to embodiments described herein, the single strands of a wound conductor, such as the single wires of the coil, may be isolated against each other. For instance, the single strands or wires may be coated with an isolated material before being wound to a wound conductor for the conductor arrangement. However, due to the application of the wound conductor in electrical machines, it is also desirable to have the whole wound conductor isolated against other components of the electrical machine, such as magnets, conductive materials, electrical lines and the like. In the following, the insulation as referred to herein may include the insulation of single strands of a conductor as well as the insulation of the whole (wound) conductor.

According to embodiments described herein, a conductor arrangement, typically a wound conductor arrangement, for an electrical machine is described. The wound conductor arrangement includes an electrical conductor having a longitudinal direction and comprising a conductor surface and an electrically conductive material (such as copper, iron, steel, and the like). The conductor arrangement further includes an insulation for insulating the electrical conductor including one or more insulation layers being at least partially provided around the conductor. The one or more insulation layers typically includes a diamond containing layer including continuously provided diamonds with diamond particles larger than 200 nm in a direction substantially parallel to the conductor surface. Further, the diamond containing layer provides the highest dielectric strength of the one or more insulation layers, and/or the diamond containing layer provides the highest partial discharge resistance of the one or more layers. Further, the diamond containing layer comprises between 0% and 5% by volume mica.

Typically, mica may be understood as a silicate material, in particular a sheet silicate mineral. Mica may for instance be described as a complex silicate with aluminum and alkali metals. Some varieties of mica may contain iron, magnesium, lithium, fluorine, barium, manganese and vanadium. The skilled person may understand that mica is generally a material, which may be used in different shapes and sizes, e.g. by being split into flexible and transparent thin films. According to some embodiments, mica may be a silicate material having a dielectric strength of about 110-120 MV/m (e.g. 118MV/m). Mica may for instance be used as an insulation material for conductors in known systems.

The term "substantially" as used herein may mean that there may be a certain deviation from the characteristic denoted with "substantially." For instance, the term "substantially parallel" refers to an arrangement of an element which may have certain deviations from the exact parallel arrangement, such as a deviation from the parallel arrangement of about 1° to about 15°. According to some embodiments, the term "substantially round" may include certain deviations from the exact round arrangement, such as a deviation from the round arrangement of about 1% to about 15% of the extension of round element in one direction. The term "Substantially no holes", e.g. on the surface, as used below may include single holes, which may for instance be present due to fabrication defects or the like.

According to some embodiments described herein, the longitudinal direction of the electrical conductor may be understood as an axis of the electrical conductor running in the direction of the largest extension of the electrical conductor. In the case that a wound conductor is provided, such as a coil having a ring-like shape or the like, the longitudinal direction may correspond to an axis running along the circumferential direction of the wound conductor. In some embodiments, the y-direction may be a direction being perpendicular to the longitudinal direction, such as the height of the electrical conductor. The x-direction may also be described as being perpendicular to the longitudinal direction, such as the width direction of the electrical conductor. Both the x- and the y-direction may be described as radial directions if a wound conductor is referred to. According to some embodiments described herein, the extension of diamond particles in a direction substantially parallel to the conductor surface may be described as the extension of diamond particles in either the x-z plane or the y-z plane.

According to some embodiments described herein, the diamond containing layer including continuously provided diamonds may be understood as a layer, in which the diamond particles stand in contact with each other, in particular through the whole diamond containing layer, e.g. through the whole thickness of the diamond containing layer. Standing in contact with each other does not necessarily mean that the diamond particles have to be in contact with other diamond particles over the whole surface, but a contact over a part of the surface or even a punctual contact may be sufficient.

In some embodiments, the continuously provided diamond particles can be described as not offering a discharge path through the diamond containing layer, in particular in a direction perpendicular to the longitudinal direction of the conductor. Typically, the continuously provided diamond particles prevent a continuous discharge path through the diamond containing layer (similar to the percolation theory). The diamond containing layer with the continuously provided diamond particles may be described as acting as an insulator restricting the passage of electrons through the diamond containing layer. In some embodiments, the continuously provided diamonds may force an electron trying to pass through to go on a kind of zig zag path, which may hinder the electron to pass through the diamond containing layer, especially the whole thickness of the diamond containing layer. The skilled person may understand that, generally, the diamond containing layer or the surface of the diamond containing layer is not necessarily un-punctered, but that small holes may be present without influencing the insulator characteristic of the diamond containing layer and/or without interrupting the continuously provided diamonds. According to some embodiments, the surface of the diamond containing layer may be a continuously closed diamond surface. For instance, the diamond may be provided as a coating, which yields a continuously closed diamond surface. Different embodiments for forming the diamond containing layer will be explained in detail below.

According to some embodiments, the diamond containing layer as referred to above may be provided in the form of a paper like structure with one or more layers of continuously provided diamond particles.

The insulation layer of embodiments described herein provides a respective topology to restrict the migration of electrons through the insulation layer, e.g. by a continuous surface topology. In particular, the topology of the insulation layer does not have short paths of holes through the insulation layer, which makes it hard to cross for an electrical discharge. The topology is chosen for the purpose of restricting electron migration and forcing the electrons on a zig-zag path in the insulation layer. The higher dielectric strength of the insulation layer according to embodiments described herein can enable the use of a thinner insulation layer. The combined effect of the reduced insulation thickness and the higher heat conductivity of the insulation layer containing a diamond containing layer may further lead to an amplified positive effect on the heat conductivity of the insulation system. In some embodiments (which will be described in detail below), a thinner carrying material for the insulation material may be used due to the lower mass of the diamond containing insulation layer.

Typically, diamond has higher dielectric strength and much higher thermal conductivity compared to materials used for insulation purposes in electrical machines, e.g. mica. This allows the diamond based insulation to be much thinner and thermally more conductive than mica based insulations. Thinner insulation with higher heat conductivity leads to better thermal management and to more space for other active materials like copper and iron.

Embodiments described herein may be used for novel electrical machine design utilizing higher efficiency and / or energy density. The described embodiments result in an economical improvement due to a better heat conductivity and a possibly higher dielectric stress than e.g. mica based insulations. Due to the better dielectric strength (and, consequently, smaller insulation width) and better heat conductivity, novel electrical machine concepts are enabled. Embodiments described herein allow for utilizing the newly freed space for more copper or iron and /or for utilizing the new thermal management opportunity to create novel high efficiency (colder running) and / or high energy density (surviving bigger currents thermally) electrical machines.

Utilizing the high heat conductivity with thinner insulations according to embodiments described herein, novel thermal management technologies can be created, which may lead to unknown machine performance levels. Due to the changed situation regarding the thermal characteristics with a diamond insulation according to embodiments described herein, the heat flow design in electrical machines can be done in previously impossible ways and in a much more efficient manner.

Figures 2, 3, and 4 show a simplified example of an electrical conductor 201 of a conductor arrangement according to embodiments described herein. The simplified drawings show the conductor as a cylinder on a rectangular basis. The skilled person may understand that an electrical conductor as referred to herein may have any suitable shape, such as a cylinder on a substantially round shape, a wound conductor including several windings, or the like. The electrical conductor 201 is surrounded (at least partially) by an insulation layer 203 including a diamond containing layer. For instance, the circumference of the electrical conductor 201 may be surrounded by the insulation layer 203, while the front sides of the conductor are not covered by the insulation layer 203. Figure 2 shows a cross-section in the x-y-plane of the conductor shown in a perspective view in Figure 4. Figure 3 shows another embodiment, wherein the insulation of the electrical conductor 201 comprises two insulation layers 203 and 202. Typically, one of the insulation layers 202 and 203 may be a diamond containing layer according to embodiments described herein. According to some embodiments, the two insulation layers 203 and 202 may have different insulation properties, such as different values of electrical conductivity.

The insulation layer(s) exemplarily and simplified shown in Figures 2 to 4, especially the diamond containing layer(s), may be realized in different ways, which will be explained in detail in the following.

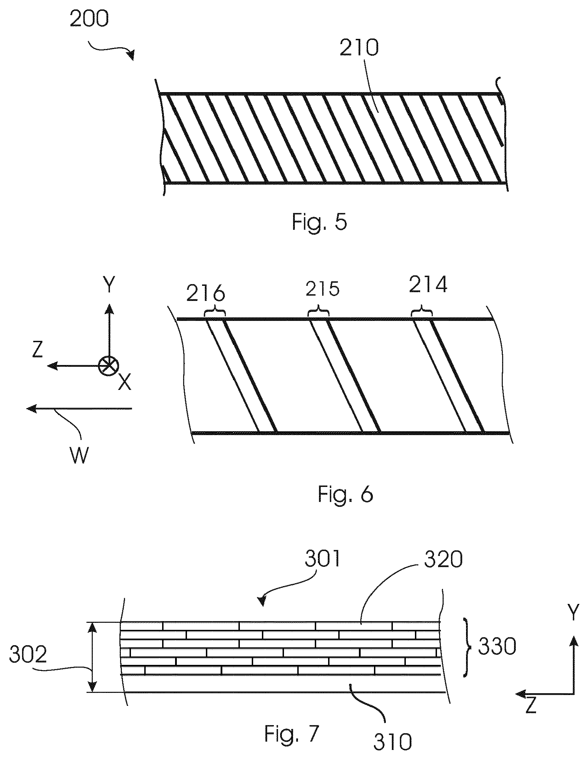

According to some embodiments, the diamond containing layer may be provided by a tape. For instance, the tape may include a carrier and diamond flakes on the carrier. Figure 5 shows a conductor arrangement 200 including an insulation in the form of a tape 210 having a diamond containing layer for electrically insulating the conductor. The example of Figure 5 shows a longitudinal conductor, of which a section is drawn. Figure 6 shows an enlarged section of the conductor arrangement of Figure 5. In the example of Figures 5 and 6, the conductor arrangement 200 includes an electrical conductor covered by a tape 210 wound around the electrical conductor. Figure 6 shows the insulation in the form of a tape 210 having overlapping portions 214, 215, and 216, where the tape 210 used for forming the insulation overlaps with the previously wound tape section. In some examples, every winding of the helically wound film may include a portion, which overlaps with the insulator already present on or around the conductor, or a previous section of the tape itself. In some embodiments, the tape may be a multi-layer tape. Additionally or alternatively, two or more films to form the insulation may be helically wound on top of another, e.g. by consecutively winding the films on the conductor (and/or the already present insulator on the conductor) or by alternatively winding the films on the conductor and/or the already present insulator on the conductor.

In some embodiments, the tape is wound about the conductor in a winding direction W in a helical matter. Typically, the winding direction W may substantially correspond to the longitudinal z-direction of the conductor arrangement.

Typically, the tape 210 forming the insulation includes a carrier and diamond flakes (as shown and explained in detail with regard to Figure 7). According to some embodiments, the diamond flakes are provided on a carrier forming together the tape. The flakes may have a ratio of flake thickness to flake length of typically 1: 5, more typically 1:10, and even more typically 1:15. In some embodiments, the ratio of flake thickness to flake length is 1:10 or greater. The flake length extends in the direction of the conductor surface and the flake thickness extends perpendicularly to the flake length and to the conductor surface. As can be seen in the diagram in the example of Figure 6, the flake length may be any extension of the flake in a z-y plane or a z-x plane, while the thickness of the flakes may be measured in x-direction or y-direction (depending on the geometry of the conductor, but in any case perpendicular to the longitudinal axis of the conductor). In the case of a wound conductor, the flake length may be measured as one extension of the flake in circumferential direction, while the flake thickness may be measured in radial direction. In some embodiments, the tape has a thickness of typically less than 0.5 mm, more typically less than 0.2mm, and even more typically less than 0.15 mm. The thickness of the tape may be measured perpendicular to the longitudinal direction (z-direction) of the tape and is exemplarily shown in Figure 7 as thickness 302.

With the embodiment of a tape including the diamond containing layer, a winding insulation with long life time and high thermal conductivity can be provided. Thereby, the tape insulation may include a carrier and diamonds in the form of diamond flakes and / or diamond powder. The embodiment using diamond powder will be referred to in detail below.

As mentioned above, also the embodiment with the tape allows for a thinner and better heat conducting insulation with known, readily applicable tape insulation technology. All benefits of diamond insulation may be provided in a quickly implementable form for short term to long term use. Diamond based winding insulation refers to the replacement of the previously used materials by a material having a better thermal conductivity and a suitable dielectric strength.

Figure 7 shows the example of an insulation layer 301 including a diamond containing layer according to embodiments described herein. The insulation layer 301 includes a carrier 310 and diamond flakes 320 on the carrier 310 as described with respect to Figures 5 and 6. Typically, the diamond flakes 320 form the diamond containing layer 330 of the insulation of the conductor arrangement according to embodiments described herein. According to some embodiments, the carrier 310 may be a web or a film. In some embodiments, the carrier 310 may include a material like a (non-woven) polyester web, a polyester film, glass cloths, non-woven glass cloths, polyimide and the like.

As can be seen in Figure 7, the flakes 320 have a larger extension in the z-direction being substantially parallel to the surface of the conductor than in y-direction corresponding to the thickness of the flakes substantially perpendicular to the surface of the conductor. As described above, the diamond containing layer of the insulation layer 301 does not provide a direct path for electrons through the layer. For instance, an electron would need to go in a zig-zag manner between the flakes when desiring to go through the insulation layer. The result is a much higher resistance compared to known insulations of electrical conductors. Providing diamond in flake shape as described in embodiments herein, electron flow through the insulation can sufficiently be restricted, e.g. similar to a diamond layer with a continuous surface with substantially no holes in the surface.

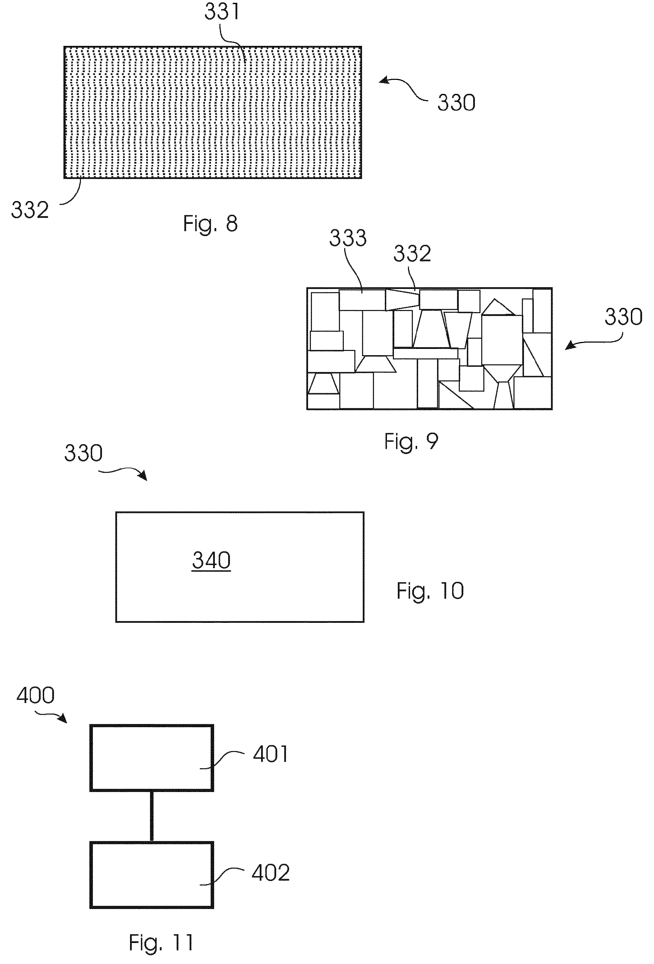

Figure 8 shows an example of a diamond containing layer 330 according to embodiments described herein. Although the example of Figure 8 is shown without a carrier, the diamond containing layer 330 of Figure 8 may also be provided on a carrier, such as a carrier described above with respect to Figure 7, e.g. for forming a tape. The embodiment shown in Figure 8 provides the diamond containing layer 330 by a diamond powder comprising a plurality of diamond particles 331. Typically, the diamond particles 331 of the diamond powder are provided in a carrier material 332. The skilled person may understand that the diamond particles of the diamond powder are continuously provided in the carrier material, although Figure 8 may show a simplified presentation for the sake of a better presentability.

According to some embodiments described herein, the diamond powder includes diamond particles 331 having a size of about 200 nm to 1mm. In particular, the size of the diamond particles may be measured as a diameter of the diamond particles in any direction. According to some embodiments, the size of the diamond particles is measured as the diameter in any one of the x-, y, or z-direction of the conductor arrangement. In some embodiments, the size of the diamond particles of the diamond powder may be measured substantially parallel to the surface of the conductor.

Figure 9 shows a further example for an insulation layer including a diamond containing layer 330 according to embodiments described herein. In the embodiment shown in Figure 9, diamond blocks 333 are provided in a carrier material 332. Typically, the diamond blocks have a size of typically about 0.5 mm to about 10 cm, more typically between about 1 mm and about 5 cm, and even more typically between about 5 mm and about 5 cm. The size of the diamond blocks may be measured as a diameter of the diamond blocks in any of the x-, y-, or z-direction. The carrier material 332, in which the diamond blocks are provided, may be the same carrier material as described with respect to Figure 8. According to some embodiments, diamond powder compressed blocks may be used, especially as slot insulation of a wound conductor. For instance, compressed diamond powder blocks are available in a variety of shapes, and can be applied as a solid diamond powder block layer as slot insulation.

The skilled person may understand that not only the diamond blocks may be used as a slot insulation but that all embodiments described herein may be used for the slot insulation in an electrical machine.

According to some embodiments, the diamond containing layer may also be provided in the form of a diamond coating. For instance, the diamond coating may be formed on the electrical conductor by vapor deposition (such as chemical vapor deposition or physical vapor deposition), sputter technology and the like. Using a coating process for proving the diamond containing layer may allow forming both inter turn and slot insulations applied by a chemical vapor deposition technique. A fully diamond covered winding could be cooled by direct cooling methods, improving e.g. the machine performance.

Figure 10 shows a diamond containing layer 330 including a closed solid diamond surface 340 according to some embodiments described herein. Such a closed surface may be achieved by a coating process or the like as described above. The diamond containing layer 330 may be formed by direct infusion of a diamond layer on the conductor material or on top of an inter turn insulation of the conductor. The diamond coating may be seen as a diamond particle larger than 200 nm according to embodiments described herein.

The advantages of the above described embodiments refer to a thinner and better heat conducting insulation, with a great potential for life time benefits. Not only the benefits in view of high dielectric strength and heat conductivity of diamond can be used, but also a potentially "everlasting" winding insulation according to the present electrical machine life time perspective. Nowadays, the winding insulation life time usually determines the life time of the electrical machine in practice. A conductor winding provided with a diamond containing insulation layer could have a strong mechanical protection, which could extend the practical life time of electrical machines to extreme time extensions.

Generally, the diamond containing layer of the insulation of the conductor arrangement according to embodiments described herein may directly be provided on the surface of the conductor. In some embodiments, the diamond containing layer of the insulation may be provided on top of a layer on the conductor, such as on top of a winding insulation of the conductor. For instance, the layer between the diamond containing layer and the conductor may be an intermediate layer. The intermediate layer may have a value of electrical conductivity between the value of the conductor and the value of the diamond containing layer. In some embodiments, the intermediate layer includes a mixture of diamond powder and epoxy resin, wherein the diamond content of the intermediate layer is less than in the diamond containing layer.

In some embodiments, which may be combined with other embodiments described herein, the diamond content of the diamond containing layer is larger than 65% by volume, in particular larger than 80% by volume. With a diamond content of larger than 65% by volume (e.g. by one of the above discussed embodiments of a tape, a powder, diamond blocks or a coating), the main insulation of the electrical conductor may substantially be provided by the diamond containing layer. Typically, the mica content within the diamond containing layer is less than 5%, such as typically between 0% and about 5%, more typically between 0% and about 3% and even more typically between about 0% and about 2%. The insulation effect of the insulation layer, especially the diamond containing layer, is provided in large parts by the diamond in the diamond containing layer. In particular, it can be said that the partial discharge resistant part of the insulation is provided by the diamond containing layer.

According to some embodiments, the diamond containing layer acts as the main insulation of the electrical conductor. Typically, the main insulation is a partial discharge resistant part of the insulation of the electrical conductor. Typically, the main or main wall insulation is used to insulate a wound conductor on full potential to the stator core on ground potential. Typically, the insulation layer or the diamond containing layer provided in embodiments described herein is configured for providing the main insulation or main wall insulation of an electrical conductor. According to some embodiments described herein, the applicability of the insulation to be used as a main insulation for the electrical conductor depends inter alia on the AC breakdown strength of the pure material and the dielectric properties.

In some embodiments, the insulation of the conductor may include different layers, e.g. layers having different material properties, such as dielectric strength, thermal conductivity, density, elasticity and the like. The diamond containing layer may thus be the layer of the insulation being most suitable to achieve the insulation effect (and in particular most suitable for the main wall insulation), e.g. by having the greatest dielectric strength among the layers of the insulation of the electrical conductor and/or the highest partial discharge resistance among the layers of the insulation of the electrical conductor.

According to some embodiments, the diamond containing layer has a thermal conductivity of larger of typically between about 1W/mk and about 50W/mK, more typically between about 3 to 25W/mK and even more typically between about 5W/mK and 10 W/mK. Typically, the thermal conductivity is measured in a direction substantially perpendicular to the longitudinal direction of the electrical conductor, or, in the case of a wound conductor, in a radial direction being substantially perpendicular to the longitudinal direction circumferential direction of the conductor.

In some embodiments, the diamond containing layer provides an electrical resistance value of typically between about 50 GΩ and about 150 GΩ, more typically between about 60 GΩ and about 120 GΩ, and even more typically between about 80 GΩ and about 120 GΩ.

According to some embodiments, values of properties of the diamond containing layer may be achieved by the diamond containing layer as a whole. For instance, the diamond containing layer may include a carrier material, in which the diamond particles or blocks are placed. The carrier material may have an influence on the above cited values. Consequently, the above cited values may be averaged values through the whole diamond containing layer.

Embodiments described herein may also refer to an electric machine, in particular an electromotor, having a conductor arrangement according to any of the herein described embodiments. For instance, an electrical machine as shown in Figure 1 may be equipped with the conductor arrangement according to embodiments described herein. For instance, the wound conductors 106 or multi-turns, such as coils or windings, shown in Figure 1 may at least partially be surrounded by an insulation including a diamond containing layer according to embodiments described herein.

According to a further aspect, a method for insulating a conductor for an electrical machine is provided. Figure 11 shows a flow chart 400 of an embodiment of the method. In box 401, an electrical conductor is provided, wherein the electrical conductor includes a surface and a radial direction. The electrical conductor may be made from copper or the like. According to some embodiments, the electrical conductor may have any suitable shape, e.g. a shape which is configured for the application in an electrical machine. In some embodiments, the electrical conductor may be a wound conductor. Typically, the electrical conductor may be a conductor as described above.

Box 402 includes insulating the electrical conductor with one or more insulation layers. Typically, one of the one or more insulation layers includes a diamond containing layer, e.g. a diamond containing layer as described in embodiments above. According to some embodiments described herein, the diamond containing layer includes continuously provided diamonds with diamond particles larger than 200 nm in a direction substantially parallel to the conductor surface. The direction and the orientation of the diamond particles may be as described in embodiments above. Typically, the diamond containing layer provides the highest dielectric strength of the one or more insulation layers, and/or the diamond containing layer provides the highest partial discharge resistance of the one or more insulation layers. According to embodiments described herein, the diamond containing layer comprises between 0% and 5% by volume mica.

As described in detail above, the low mica content and especially a high diamond content in the diamond containing layer result in the insulation effect being substantially provided by the arrangement of diamond in the diamond containing layer. The diamond in the diamond containing layer may also be described as being responsible for the highest partial discharge resistance and/or the highest dielectric strength of the diamond containing layer among the layers of the insulation of the electrical conductor.

According to some embodiments, the use of diamonds in an insulation layer for an electrical conductor, especially a wound conductor, is provided. The electrical conductor includes a surface and a radial direction. The diamonds are typically provided in a diamond containing layer including continuously provided diamonds with diamond particles larger than 200 nm in a direction substantially parallel to the conductor surface, as e.g. described in detail above. According to embodiments described herein, the diamond containing layer includes between 0% and 5% by volume mica.

The diamond containing layer may in particular be used in a winding insulation in an electrical machine winding, as for instance described with respect to Figure 1. Using diamond insulation in electrical machine windings is a substantial change in the insulation concept and enables the improvements of having a winding insulation with long life time and high thermal conductivity. The use of the diamond containing layer may be realized via a tape insulation made from diamond flakes and / or diamond powder, a direct infusion of a diamond layer on the conductor surface or on top of inter turn insulation, diamond powder compressed blocks as sot insulation. Variants of embodiments of diamond containing layer are also described with respect to Figures 5 to 10.

By using a diamond containing layer according to embodiments described herein, a thinner and better heat conducting insulation with huge potential life time benefits can be provided. Not only the benefits of high dielectric strength and heat conductivity of diamond may be considered, but also a potentially almost "everlasting" winding insulation from present electrical machine life time perspective. Consequently, new electrical machine design utilizing higher efficiency and / or energy density may be developed. Due to the better dielectric strength (smaller insulation width) and heat conductivity, novel electrical machine concepts are enabled by embodiments described herein. Utilizing the newly freed space for more copper or iron and /or utilizing the new thermal management opportunity, novel high efficiency (colder running) and / or high energy density (surviving bigger currents thermally) electrical machines can be developed.

Typically, the dielectric strength of diamond is about 2000 MV/m while mica has about 118 MV/m. This difference may result in a diamond layer being 16.9 times thinner than a corresponding mica layer that has the same dielectric strength. Consequently, a medium voltage mica tape insulation has 2.5 mm thickness on both sides of the winding. Assuming for the sake of simplicity that the whole layer of 2.5 mm is made of mica and calculating a corresponding diamond layer thickness, an equivalent of a diamond layer with a thickness of 0.15 mm can be provided according to embodiments described herein.

In other words, the amount of diamonds to replace a certain amount of mica would be about proportional to the 16.9 x factor for the width which is also proportional with volume. As the density of diamond is 3510 kg/m³ and different Mica types range from 2700 - 3300 kg/m³, using the most conservative 3510 vs 2700 kg ratio, to replace a certain amount of mica with 2700 kg/m³ density 16.9*2700/3510 times less kilos of diamonds would be used, which is about 13 times less in kilos.

According to some embodiments, the beneficial properties of diamond result from the physical properties of diamond. For instance, when diamond is bombarded with high energy particles, unlike other materials (e.g. mica), the material structure remains unaffected and no "destruction channel" is created through the material. In practice, the diamond conducts the heat so fast away from the impact channel that the incoming energy cannot stay there to destroy the material structure.

Typically, the situation of thermal expansion in a slot of a winding in an electrical machine according to embodiments described herein has to be considered. For instance, the interface between the conductive material and the diamond, especially with regard to the different thermal expansion behavior may be considered when using embodiments described herein.

Though the present invention has been described on the basis of some preferred embodiments, those skilled in the art should appreciate that those embodiments should by no way limit the scope of the present invention. Without departing from the spirit and concept of the present invention, any variations and modifications to the embodiments should be within the apprehension of those with ordinary knowledge and skills in the art, and therefore fall in the scope of the present invention which is defined by the accompanied claims.

### Reference numerals

- 100: electrical motor
- 101: stator
- 102: rotor
- 104: rotation axis
- 105: stator core
- 106: wound conductor
- 200: conductor arrangement
- 201: electrical conductor
- 202, 203: insulation layers
- 210: tape
- 214-216: overlapping portions of the tape
- 301: insulation layer
- 302: Thickness of diamond containing layer
- 310: carrier
- 320: diamond flakes
- 330: diamond containing layer
- 331: diamond powder particles
- 332: carrier material
- 333: diamond blocks
- 340: diamond coating
- 400: method
- 401-402: boxes
- W: winding direction

## Claims

1. Conductor arrangement (200), typically a wound conductor arrangement, for an electrical machine (100), comprising:
an electrical conductor (201) having a longitudinal direction (z) and comprising a conductor surface, the electrical conductor comprising an electrically conductive material; and
an insulation for insulating the electrical conductor (201) comprising one or more insulation layers (202; 203) being at least partially provided around the conductor (201),
wherein the one or more insulation layers (202, 203) comprises a diamond containing layer (330), the diamond containing layer (330) comprising continuously provided diamonds (320; 331; 333; 340) with diamond particles larger than 200 nm in a direction substantially parallel to the conductor surface, wherein the diamond containing layer (330) provides the highest dielectric strength of the one or more insulation layers (202; 203), and/or wherein the diamond containing layer (330) provides the highest partial discharge resistance of the one or more insulation layers (202; 203); and
wherein the diamond containing layer (330) comprises between 0% and 5% by volume mica.

2. The conductor arrangement according to claim 1, wherein the diamond content of the diamond containing layer (330) is larger than 65% by volume, in particular larger than 80% by volume.

3. The conductor arrangement according to any of the preceding claims, wherein the diamond containing layer (330) is configured to act as the main insulation of the electrical conductor (201), the main insulation being a partial discharge resistant part of the insulation; and/or
wherein the surface of the diamond containing layer (330) is a continuous closed diamond surface.

4. The conductor arrangement according to any of the preceding claims, wherein the diamond containing layer (330) has a thermal conductivity of larger than 1 W/mK to 10W/mK in a radial direction of the electrical conductor (201) with respect to the longitudinal direction (z).

5. The conductor arrangement according to any of the preceding claims, wherein the diamond in the diamond containing layer (330) is provided by:
A tape (210) comprising a carrier (310) and diamond flakes (320) on the carrier (310), wherein in particular the diamond flakes (320) have a ratio of flake thickness to flake length of 1:10 or greater, wherein the flake length extends in the longitudinal direction of the electrical conductor (201) and wherein the flake thickness extends perpendicularly to the flake length and the surface of the electrical conductor (201);
A diamond powder (331) provided in a carrier material (332), wherein in particular the diamond powder (331) comprises particle sizes of about 200 nm to 1mm;
Diamond blocks (333) provided in a carrier material (332), wherein in particular the diamond blocks (333) have a size of 1 mm to 5 cm; and/or
A diamond coating (340).

6. The conductor arrangement according to claim 5, wherein the carrier (310; 332) is chosen from the group consisting of: non-woven glass cloth, non-woven polyester web, polyester films, and polyimide.

7. The conductor arrangement according to any of the preceding claims, wherein the diamond containing layer (330) is formed as a tape (210) that is wound around the electrical conductor (201), wherein the tape (210) is in particular a multi-layer tape.

8. The conductor according to claim 7, wherein the tape (210) has a thickness of less than 0.2mm, in particular less than 0.15 mm, in particular in a direction substantially perpendicular to the longitudinal direction (z) of the electric conductor (201).

9. The conductor arrangement according to any of claims 7 to 8, wherein the tape (210) is wound about the conductor (201) in a winding direction (W) in a helical matter, and wherein the tape (210) is in particular wound about the conductor (201) in a partially overlapping manner.

10. The conductor arrangement according to any of the preceding claims, wherein the conductor (201) is a conductor coil (106) or bar for a HV rotating machine, in particular for rated voltages of larger than 1 kV, more typically larger than 15 kV, and even more typically larger than 30 kV.

11. The conductor arrangement according to any of the preceding claims, wherein the diamond containing layer (330) provides an electrical resistance value of 80 GΩ to 120 GΩ.

12. The conductor arrangement according to any of the preceding claims, wherein an intermediate layer (202) is provided between the electrical conductor (201) and the diamond containing layer (203; 330), and wherein the intermediate layer (202) comprises a mixture of diamond powder and epoxy resin, the diamond content being less than in the diamond containing layer (203; 330).

13. An electrical machine (100), in particular an electromotor, having a conductor arrangement (200) according to any of the preceding claims.

14. Use of diamonds in an insulation layer (202; 203) for an electrical conductor (201) having a surface and a radial direction, wherein the diamonds are provided in a diamond containing layer (330), the diamond containing layer (330) comprising continuously provided diamonds (320; 331; 333; 340) with diamond particles larger than 200 nm in a direction substantially parallel to the conductor surface;
wherein the diamond containing layer (330) comprises between 0% and 5% by volume mica.
